# EUROPÄISCHE PATENTSCHRIFT

(11) **EP 1 527 846 B1**
(45) Veröffentlichungstag und Bekanntmachung des Hinweises auf die Patenterteilung: **01.02.2006**
(21) Anmeldenummer: 03025072.4
(22) Anmeldetag: 01.11.2003
(51) Int. Cl.: B23Q 11/08, F16P 1/00

(54) **Maschinelle Anordnung zum Bearbeiten von Werkstücken in einem Arbeitsraum mit Arbeitsraumtrennung**
Machine tool with panelling
Machine-outil avec panneaux de couverture

(43) Veröffentlichungstag der Anmeldung: 04.05.2005
(73) Patentinhaber: TRUMPF Werkzeugmaschinen GmbH + Co. KG, 71254 Ditzingen (DE)
(72) Erfinder: Häcker, Michael, 71299 Wimsheim (DE); Busch, Marcus, 71287 Weissach / OT-Flacht (DE); Schopf, Ralf, 71254 Ditzingen (DE)
(74) Vertreter: Kohler Schmid Möbus

(56) Entgegenhaltungen:
- EP-A- 1 350 595
- DE-A- 3 513 944
- DE-A- 3 635 900
- DE-A- 10 020 804
- DE-U- 29 617 118
- US-A- 4 597 698

## Beschreibung

Die Erfindung betrifft eine maschinelle Anordnung zum Bearbeiten von Werkstücken, mit einem Arbeitsraum für die Werkstückbearbeitung, in welchem eine Werkstücklagerung angeordnet ist und welcher eine Arbeitsraumabtrennung mit einem Durchlass und wenigstens einem Verschlusselement hierfür aufweist, wobei das Verschlusselement in horizontaler Richtung zwischen einer Offen- und einer Geschlossenstellung bewegbar ist und den Durchlass der Arbeitsraumabtrennu.ng in der Offenstellung wenigstens teilweise freigibt und in der Geschlossenstellung wenigstens teilweise versperrt und wobei das Verschlusselement bei seiner Bewegung mittels wenigstens eines stationären Führungselementes geführt ist, das sich in Bewegungsrichtung des Verschlusselementes über wenigstens einen Teil der Durchlassbreite erstreckt.

Sowohl aus Gründen der Arbeitssicherheit als auch im Interesse der Vermeidung von Störungen aufgrund von Umgebungseinflüssen ist in einer Vielzahl von Fällen der Arbeitsraum von Anlagen zur Werkstückbearbeitung zumindest während des eigentlichen Bearbeitungsvorganges abzusperren. Dessen ungeachtet muss der Arbeitsraum im Bedarfsfall, etwa zum Beladen der in dem Arbeitsraum angeordneten Werkstücklagerung vor Beginn des Bearbeitungsprozesses, zugänglich sein. Es werden daher Arbeitsraumabtrennungen der vorstehend genannten Art verwendet, deren Durchlass wahlweise geöffnet oder geschlossen werden kann.

Eine gattungsgemäße Anordnung ist bekannt aus DE 35 13 944 Al. Beim Stand der Technik handelt es sich um eine Werkzeugmaschine mit einer Verkleidung, deren Durchlass mittels einer aus mehreren Segmenten bestehenden Schiebetür verschlossen werden kann. Die Segmente der Schiebetür sind auf dem Maschinenbett der vorbekannten Werkzeugmaschine in horizontaler Richtung beweglich geführt. Das Maschinenbett seinerseits ruht auf dem Untergrund der Werkzeugmaschine. Eine Werkstücklagerung in Form eines Werkstücktisches ist im Innern des Arbeitsraumes der Werkzeugmaschine und dort mit Abstand von dem Maschinenbett angeordnet. Bei geöffneter Schiebetür ist der Werkstücktisch über das Maschinenbett hinweg zugänglich. Unmittelbar oberhalb des Untergrundes der Werkzeugmaschine wird ein Zugang zu dem Arbeitsraum durch das Maschinenbett blockiert.

Die Zugänglichkeit des Arbeitsraumes zu verbessern, hat sich die vorliegende Erfindung ausgehend von dem beschriebenen Stand der Technik zum Ziel gesetzt.

Erfindungsgemäß gelöst wird diese Aufgabe durch die maschinelle Anordnung gemäß Patentanspruch 1. Im Falle der Erfindung ist demnach wenigstens ein Verschlusselement unmittelbar auf dem Untergrund der maschinellen Anordnung gelagert. Bodenseitig erübrigen sich daher Führungseinrichtungen für das Verschlusselement, welche den Zugang zu dem Arbeitsraum der maschinellen Anordnung zumindest erschweren würden. Verzichtbar sind insbesondere Bodenschienen, die sowohl bei auf dem Untergrund aufliegender Montage als auch bei versenkter Anordnung hinderlich wären. Gleichzeitig sind erfindungsgemäß oberhalb des Untergrundes der maschinellen Anordnung ausschließlich an der Werkstücklagerung stationäre Führungseinrichtungen für das oder die Verschlusselemente vorgesehen. Dementsprechend wird der Zugang zu der Werkstücklagerung nicht durch gegenüber der Werkstücklagerung durchlassseitig vorgesetzte Führungsvorrichtungen blokiert bzw. erschwert. Insgesamt ergibt sich eine von dem Untergrund der maschinellen Anordnung nach oben hin völlig freie Öffnung der Arbeitsraumabtrennung. Dessen ungeachtet lässt sich das oder die Verschlusselemente aufgrund der erfindungsgemäßen Abstützung und Führung funktionssicher in die Offen- und in die Geschlossenstellung überführen.

Besondere Ausführungsarten der Erfindung nach Patentanspruch 1 sind in den abhängigen Patentansprüchen 2 bis 11 beschrieben.

Im Falle der Erfindungsbauart gemäß Patentanspruch 2 ergibt sich für die Führung des betreffenden Verschlusselementes eine in vertikaler Richtung ausgedehnte Basis. Eine stabile Lagerung des Verschlusselementes auch bei seiner Bewegung in Öffnungs- und Schließrichtung ist die Folge.

Ebenfalls im Interesse stabiler und somit funktionssicherer Verhältnisse ist in Weiterbildung der Erfindung das kennzeichnende Merkmal von Patentanspruch 3 vorgesehen. Die anspruchsgemäße feststehende seitliche Lagerung stabilisiert das oder die Verschlusselemente insbesondere bei deren Bewegung.

Ausweislich Patentanspruch 4 dient als feststehende seitliche Lagerung zweckmäßigerweise ein feststehender Abtrennungsteil der Arbeitsraumabtrennung. Eine gesonderte Lagerungseinrichtung erübrigt sich daher.

Die Anbindung von Verschlusselementen an den feststehenden Teil der Arbeitsraumabtrennung gestaltet sich dann besonders einfach, wenn - wie ausweislich Patentanspruch 5 vorgesehen - als feststehende seitliche Lagerung eine seitliche Durchlassbegrenzung der Arbeitsraumabtrennung genutzt wird. Diese seitliche Durchlassbegrenzung ist dem oder den zu lagernden und zu führenden Verschlusselementen unmittelbar benachbart.

Die in Patentanspruch 6 beschriebene Variante der erfindungsgemäßen Anordnung zeichnet sich durch die Möglichkeit aus, eine stabile und funktionssichere Lagerung und Führung wenigstens eines Verschlusselementes mittels einer verhältnismäßig kleinbauenden seitlichen Lagerung zu realisieren. Anspruchsgemäß werden das oder die betreffenden Verschlusselemente nicht unmittelbar an der feststehenden seitlichen Lagerung sondern vielmehr durch wenigstens ein Führungsteleskop geführt. Die feststehende seitliche Lagerung muss folglich nur eine Befestigungsmöglichkeit für das wenigstens eine Führungsteleskop bieten, nicht aber eine Führung für ein Verschlusselement bereitstellen, die aus Stabilitätsgründen in Bewegungsrichtung des Verschlusselementes eine möglichst breite Basis aufzuweisen hätte.

Im Falle der Erfindungsbauart nach Patentanspruch 7 lässt sich ein über wenigstens ein Führungsteleskop mit der seitlichen Durchlassbegrenzung verbundenes Verschlusselement in eine Offenstellung überführen, in welcher es den Durchlass der Arbeitsraumabtrennung seitlich zumindest annähernd vollständig freigibt.

Die in Patentanspruch 8 angegebenen Erfindungsmerkmale tragen dem Umstand Rechnung, dass am Montageort der erfindungsgemäßen maschinellen Anordnung der Untergrund in seinem Verlauf von einem ideal ebenen und horizontalen Verlauf abweichen kann. Anspruchsgemäß sind Maßnahmen zum Höhenausgleich vorgesehen, die einander ergänzend oder alternativ realisiert werden können.

Ausweislich der Patentansprüche 9 bis 11 ist in bevorzugter Ausgestaltung der Erfindung eine Mehrzahl von Verschlusselementen für den Durchlass der Arbeitsraumabtrennung vorgesehen. Diese Verschlusselemente sind senkrecht zu ihrer Hauptebene gegeneinander versetzt und teleskopartig in die Offen- und in die Geschlossenstellung bewegbar (Patentanspruch 9). Wenigstens ein Verschlusselement ist an einem anderen, vorzugsweise an dem ihm quer zu seiner Hauptebene unmittelbar benachbarten Verschlusselement in Bewegungsrichtung geführt (Patentanspruch 10). An eine feststehende seitliche Lagerung, vorzugsweise an eine seitliche Durchlassbegrenzung der Arbeitsraumabtrennung, ist der Einfachheit halber nur dasjenige Verschlusselement angebunden, welches der seitlichen Lagerung bzw. der seitlichen Durchlassbegrenzung am nächsten liegt (Patentanspruch 11).

Nachstehend wird die Erfindung anhand beispielhafter schematischer Darstellungen näher erläutert. Es zeigen:
- Figur 1: eine perspektivische Ansicht einer Laserbearbeitungsmaschine mit einer Arbeitsraumabtrennung mit geschlossener Schiebetür,
- Figur 2: die Laserbearbeitungsmaschine gemäß Figur 1 mit geöffneter Schiebetür,
- Figur 3: eine Einzeldarstellung der Schiebetür gemäß den Figuren 1 und 2 in der arbeitsraumseitigen Ansicht,
- Fign. 4 und 5: die Führung der Schiebetür gemäß den Figuren 1 bis 3 an einer Blechauflage des Arbeitsraumes,
- Fign. 6 bis 9: Führungen am oberen Rand der Schiebetür gemäß den Figuren 1 bis 3,
- Fign. 10 und 11: Führungen am unteren Rand der Schiebetür gemäß den Figuren 1 bis 3 und
- Figur 12: eine Alternative zu der Schiebetürführung und -lagerung gemäß den Figuren 1 bis 11.

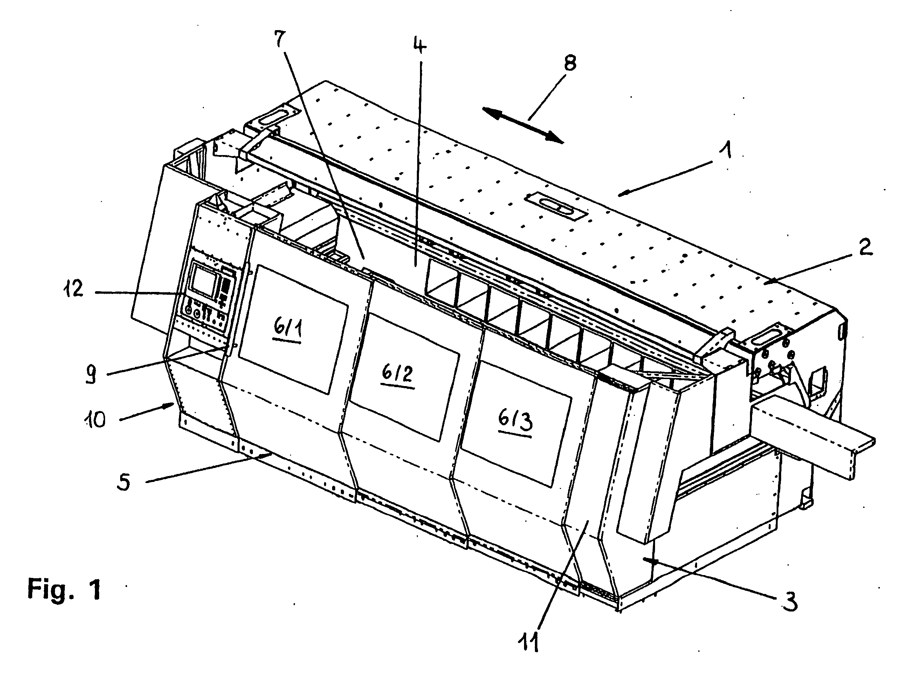

Ausweislich Figur 1 umfasst eine maschinelle Anordnung in Form einer Laserbearbeitungsmaschine 1 ein Maschinenbett 2 sowie eine Arbeitsraumabtrennung 3. Die Arbeitsraumabtrennung 3 schließt einen Arbeitsraum 4 der Laserbearbeitungsmaschine 1 an seinen andernfalls zugänglichen Seiten ab. Sie ist mit einer Schiebetür 5 versehen, die ihrerseits aus Verschlusselementen in Form von drei Türsegmenten 6/1, 6/2, 6/3 besteht.

Die Schiebetür 5 dient zum Verschließen eines Durchlasses 7 der Arbeitsraumabtrennung 3. Die Türsegmente 6/1, 6/2, 6/3 sind manuell in einer durch einen Doppelpfeil 8 veranschaulichten Bewegungsrichtung verschiebbar. Quer zu ihrer Hauptebene sind die Türsegmente 6/1, 6/2, 6/3 gegeneinander versetzt angeordnet. Teleskopartig lassen sie sich in beide Richtungen des Doppelpfeils 8 bewegen. Das zuäußerst liegende Türsegment 6/1 ist mit einem Handgriff 9 versehen.

Der Durchlass 7 der Arbeitsraumabtrennung 3 wird seitlich durch eine feststehende linke Durchlassbegrenzung 10 sowie eine gleichfalls feststehende rechte Durchlassbegrenzung 11 flankiert. In die linke Durchlassbegrenzung 10 ist ein Bedienpaneel 12 der Laserbearbeitungsmaschine 1 integriert. Die Türsegmente 6/1, 6/2, 6/3 sind mit transparenten Polycarbonatscheiben versehen. Im geschlossenen Zustand verhindern die Türsegmene 6/1, 6/2, 6/3 sicher das Austreten von Laser- bzw. Streustrahlung aus dem Innern des Arbeitsraumes 4. Die einschlägigen Sicherheitsnormen (z.B. VBG 093) werden erfüllt. Die Gesamtanordnung fällt damit in die Laserschutzklasse II.

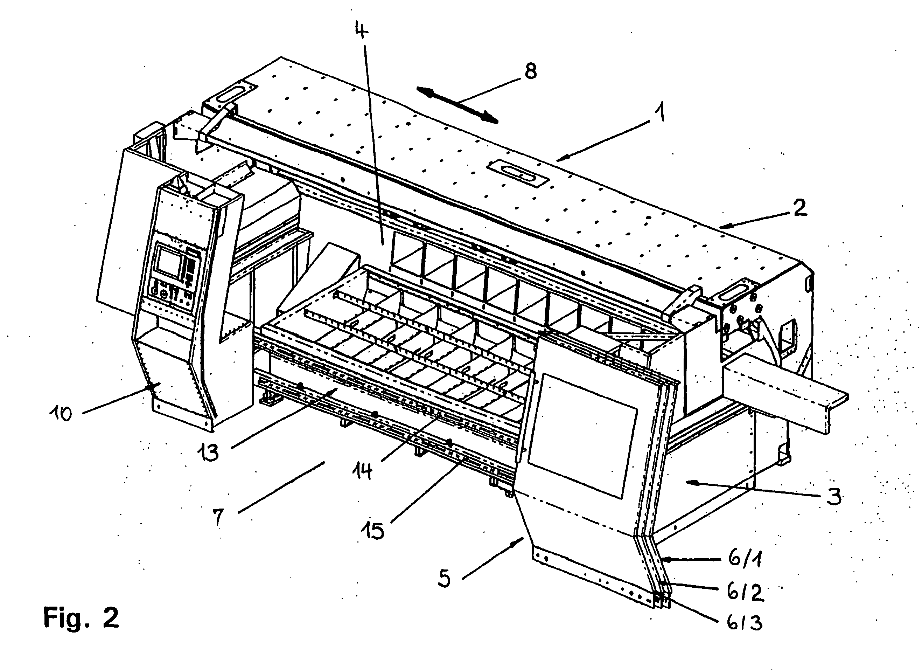

Wie Figur 2 bei geöffneter Schiebetür 5 erkennen lässt, ist im Innern des Arbeitsraumes 4 eine Blechauflage 13 als Werkstücklagerung angeordnet. In dem gezeigten Beispielsfall ist die Blechauflage 13 ohne Verbindung mit dem Maschinenbett 2 aufgestellt. Alternativ kann die Blechauflage 13 aber auch an das Maschinenbett 2 angebunden sein.

An ihrer Oberseite lagert die Blechauflage 13 in gewohnter Weise zu bearbeitende Bleche. Ein zur Blechbearbeitung eingesetzter und zu diesem Zweck entlang dem Maschinenbett 2 verfahrbarer Laserschneidkopf ist in den Abbildungen der Übersichtlichkeit halber nicht gezeigt. An ihrer zu dem Durchlass 7 der Arbeitsraumabtrennung 3 hin liegenden Stirnseite ist die Blechauflage 13 mit in vertikaler Richtung gegeneinander versetzten Führungselementen in Form von stationären Führungsschienen 14, 15 versehen.

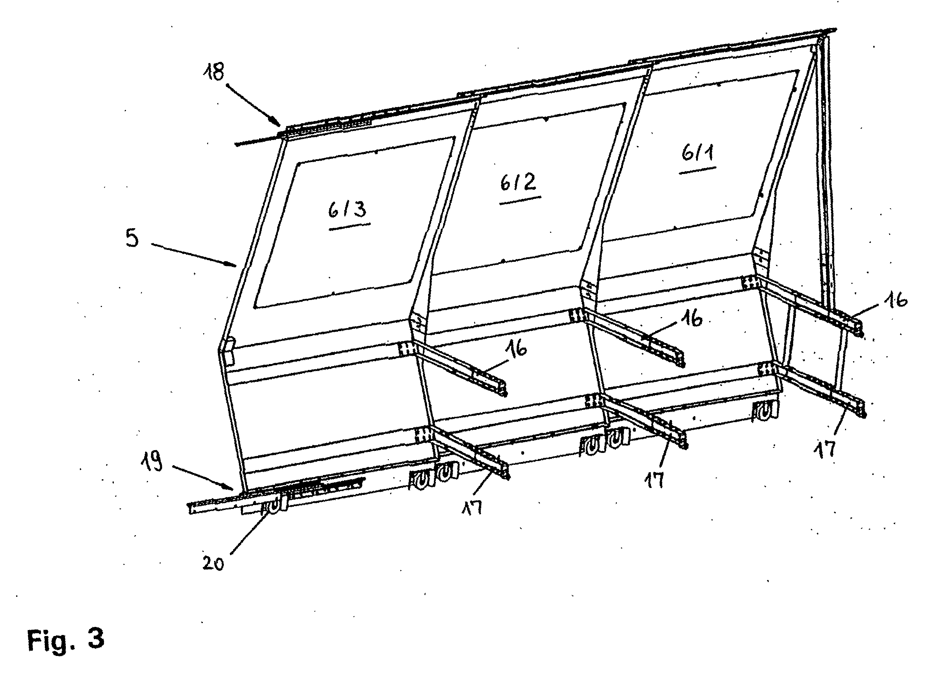

An den Führungsschienen 14, 15 sind die Türsegmente 6/1, 6/2, 6/3 über obere Führungsarme 16 sowie untere Führungsarme 17 in Richtung des Doppelpfeils 8 beweglich geführt. Im Einzelnen sind türsegmentseitige und mit den Türsegmenten 6/1, 6/2, 6/3 bewegliche Führungseinrichtungen in Figur 3 gezeigt.

An dem oberen Rand des Türsegments 6/3 ist ein oberes Führungsteleskop 18, an dem unteren Rand des Türsegments 6/3 ein unteres Führungsteleskop 19 angeordnet. Aufbau und Funktionsweise der Führungsteleskope 18, 19 werden nachstehend näher erläutert werden.

Sämtliche Türsegmente 6/1, 6/2, 6/3 sind an ihrem unteren Rand über Rollen 20 unmittelbar auf dem Untergrund der Laserbearbeitungsmaschine 1 aufliegend gelagert. Zum Schutz insbesondere der Rollenlagerungen gegen Verschmutzung sind in Bewegungsrichtung beidseits der Rollen 20 Abstreiferbleche vorgesehen.

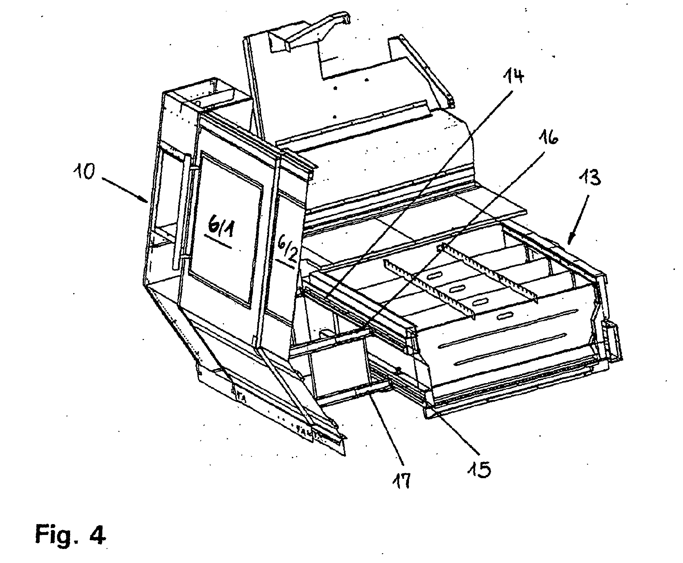

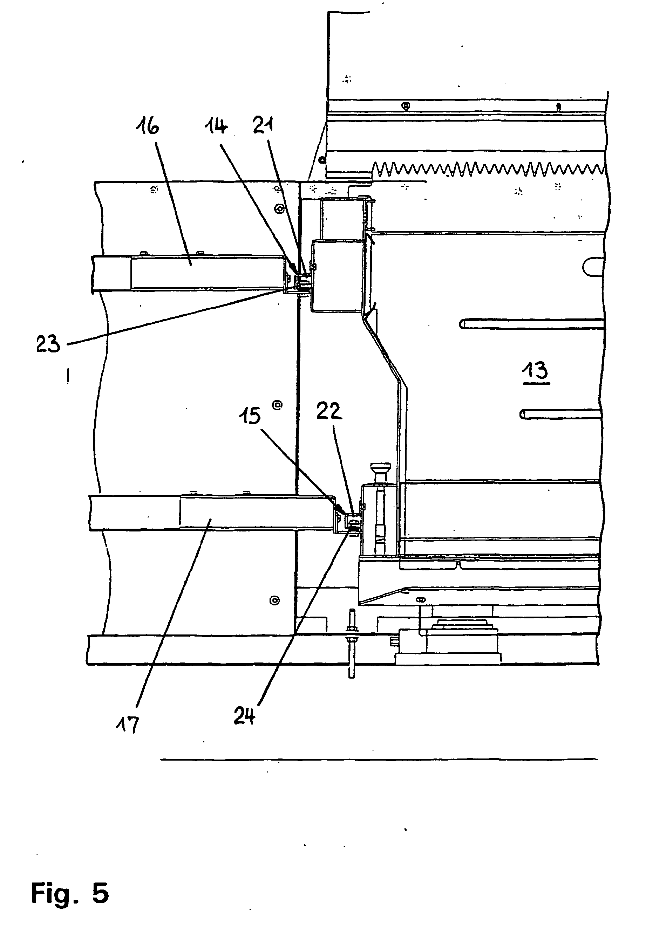

Die Führung der Türsegmente 6/1, 6/2, 6/3 an der Blechauflage 13 ist im Detail in den Figuren 4 und 5 dargestellt. Dabei zeigt Figur 4 zwar lediglich die Führung des Türsegmentes 6/1; entsprechend stellen sich aber auch die Verhältnisse an den Türsegmenten 6/2 und 6/3 dar.

Ausweislich der Figuren 4 und 5 handelt es sich bei den Führungsschienen 14, 15 um Profile mit zweifacher Abwinkelung. An einem vertikalen Profilschenkel sind die Führungsschienen 14, 15 mit der Blechauflage 13 verschraubt. Ein sich an den zur Verbindung mit der Blechauflage 13 dienenden Profilschenkel anschließender horizontaler Profilschenkel sowie ein von dem horizontalen Profilschenkel nach unten ragender weiterer vertikaler Profilschenkel begrenzen gemeinsam mit jeweils einer Wand der Blechauflage 13 Führungsaufnahmen 21, 22, die sich in Bewegungsrichtung 8 der Türsegmente 6/1, 6/2, 6/3 erstrecken. Führungsrollen 23 an den oberen Führungsarmen 16 der Türsegmente 6/1, 6/2, 6/3 greifen in die obere Führungsaufname 21 ein. Entsprechend sind Führungsrollen 24 an den unteren Führungsarmen 17 der Türsegmente 6/1, 6/2, 6/3 im Innern der Führungsaufnahme 22 angeordnet. Der gegenseitige vertikale Versatz der Horizontalführungen sorgt für eine Stabilisierung der Türsegmente 6/1, 6/2, 6/3 in einer senkrecht zu ihrer Hauptebene verlaufenden Vertikalebene.

Wie Figur 5 zu entnehmen ist, sind sowohl die oberen Führungsrollen 23 als auch die unteren Führungsrollen 24 mit Spiel in vertikaler Richtung in der jeweiligen Führungsaufnahme 21, 22 angeordnet. Aufgrund dieses vertikalen Spiels lassen sich Unebenheiten des die Rollen 20 lagernden Untergrundes der Laserbearbeitungsmaschine 1 bei der Bewegung der Türsegmente 6/1, 6/2, 6/3 ausgleichen, ohne dass durch diesen Höhenausgleich die Horizontalführung der Türsegmente 6/1, 6/2, 6/3 an der Blechauflage 13 beeinträchtigt würde.

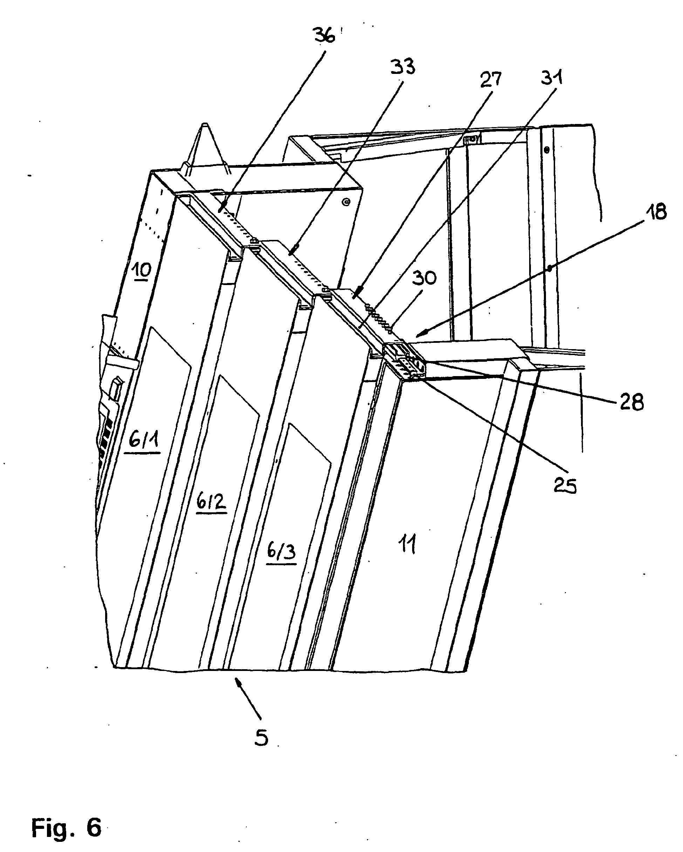

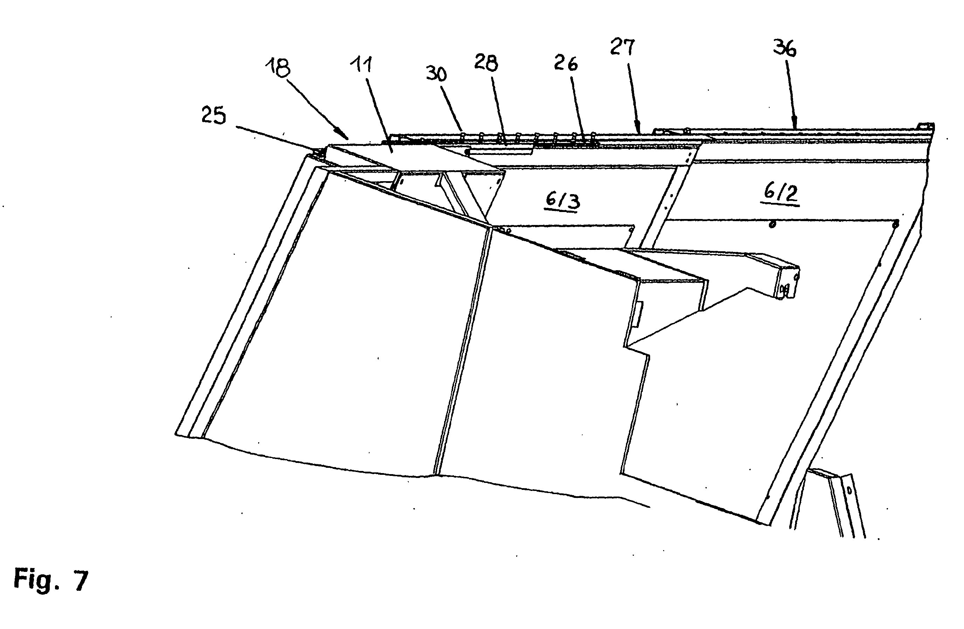

Aus den Figuren 6 bis 9 ersichtlich sind zum einen Aufbau und Funktionsweise des oberen Führungsteleskopes 18, zum andern die konstruktive Gestaltung gegenseitiger Führungen der Türsegmente 6/1, 6/2, 6/3.

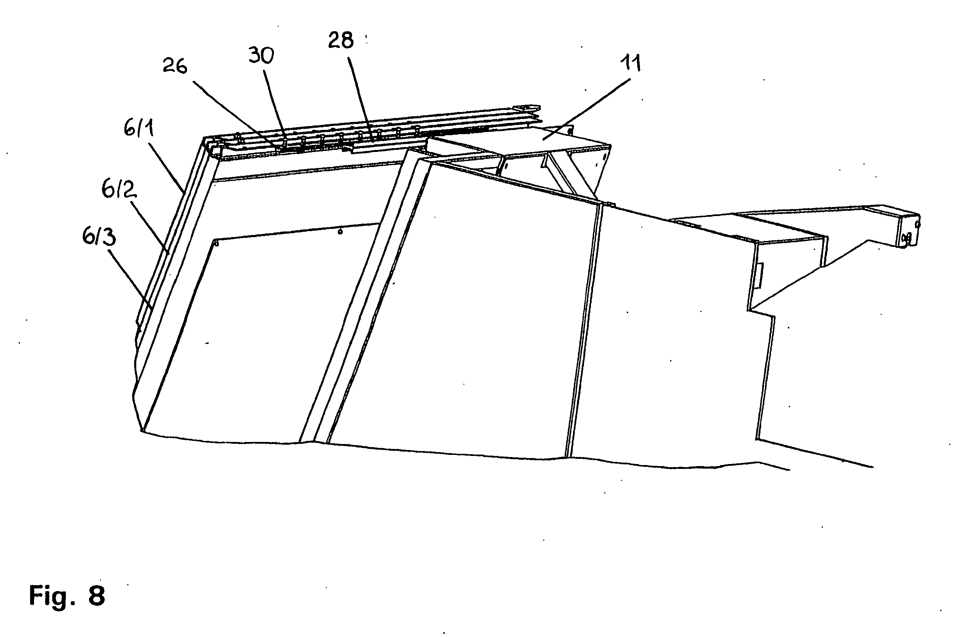

Das obere Führungsteleskop 18 umfasst demnach drei Teleskopelemente. Ein Teleskopelement in Form einer Teleskopschiene 25 ist an der Oberseite der rechten Durchlassbegrenzung 11 mit dieser verschraubt. Ein weiteres als Teleskopschiene 26 ausgebildetes Teleskopelement ist über ein Winkelprofil 27 mit dem Türsegment 6/3 verbunden. Ein drittes Teleskopelement schließlich ist als Teleskop-Führungsprofil 28 zwischen den Teleskopschienen 25, 26 angeordnet. Die Teleskopschienen 25, 26 und das Teleskop-Führungsprofil 28 sind relativ zueinander in Bewegungsrichtung 8 der Türsegmente 6/1, 6/2, 6/3 verschiebbar. Infolgedessen ist das obere Führungsteleskop 18 in der genannten Richtung teleskopierbar. Dabei lässt sich die mit dem Türsegment 6/3 verbundene Teleskopschiene 26 ausweislich Figur 8 in Öffnungsrichtung der Türsegmente 6/1, 6/2, 6/3 über die mit der rechten Durchlassbegrenzung 11 verschraubte Teleskopschiene 25 hinausbewegen. Dies eröffnet die Möglichkeit, das Türsegment 6/3 und mit diesem auch die Türsegmente 6/1 und 6/2 in eine Öffnungslage zu überführen, bei der sie den Durchlass 7 der Arbeitsraumabtrennung 3 seitlich nahezu vollständig freigeben. Die rechte Durchlassbegrenzung 11 kann in Bewegungsrichtung 8 der Türsegmente 6/1, 6/2, 6/3 ausgesprochen schmal bauen und bildet folglich eine lediglich kleine, den Zugang zu dem Arbeitsraum 4 kaum einengende Störkontur aus. Im gezeigten Beispielsfall ist die rechte Durchlassbegrenzung 11 schmaler als die einzelnen Türsegmente 6/1, 6/2, 6/3. Nachdem die seitliche Durchlassbegrenzung 11 gleichzeitig den seitlichen Abschluss der vorderen Wand der Arbeitsraumabtrennung 3 bildet, besitzt die Arbeitsraumabtrennung 3 ungeachtet der großen Durchlassbreite eine verhältnismäßig geringe Breite. Seitlich neben der Arbeitsraumabtrennung 3 verbleibt somit ein ausgedehnter Freiraum.

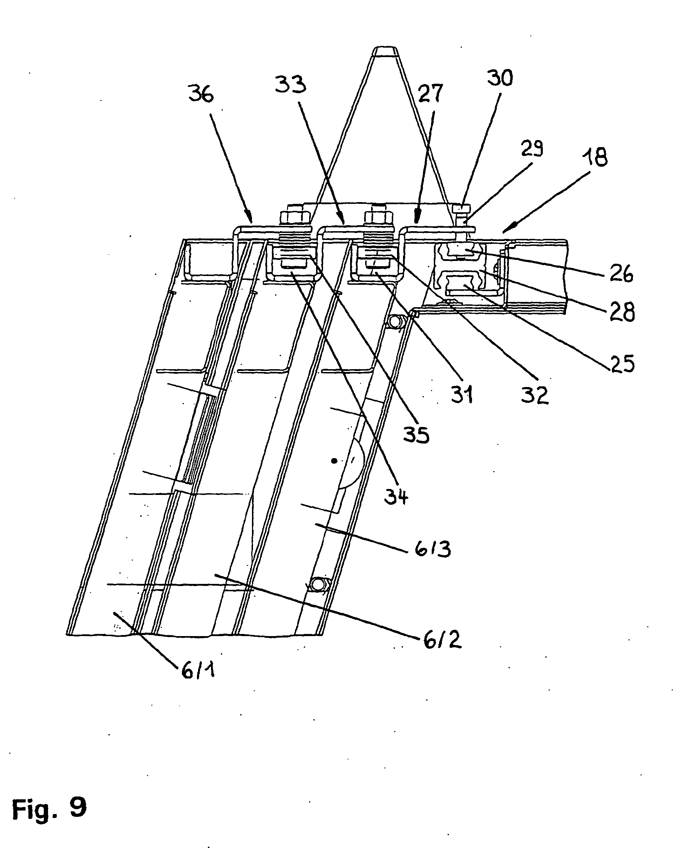

Wie insbesondere aus Figur 9 hervorgeht, ist die Verbindung zwischen dem Winkelprofil 27 am oberen Rand des Türsegmentes 6/3 und der Teleskopschiene 26 in vertikaler Richtung spielbehaftet. Zu diesem Zweck durchsetzen Bolzen 29 von Verbindungsschrauben 30 Bohrungen in dem horizontalen Schenkel des Winkelprofils 27 mit einem glattwandigen Schaftteil, der in der betreffenden Bohrung an dem Winkelprofil 27 in vertikaler Richtung verschieblich aufgenommen ist. Das auf diese Art und Weise realisierte vertikale Spiel gestattet in vertikaler Richtung eine Verlagerung des Türsegmentes 6/3 und somit auch der Türsegmente 6/1 und 6/2 gegenüber der feststehenden rechten Durchlassbegrenzung 11. Auch diese vertikale Ausweichmöglichkeit der Türsegmente 6/1, 6/2, 6/3 dient zum Ausgleich von Unebenheiten des Untergrundes der Laserbearbeitungsmaschine 1 bzw. der Auflagefläche der Rollen 20 am unteren Rand der Türsegmente 6/1, 6/2, 6/3.

Insbesondere aus den Figuren 6 und 9 geht hervor, dass das Winkelprofil 27 an dem oberen Rand des Türsegmentes 6/3 neben dem Schenkel zur Verbindung mit dem oberen Führungsteleskop 18 auch eine in Bewegungsrichtung 8 verlaufende Führungskammer 31 aufweist. In die Führungskammer 31 des Winkelprofils 27 greifen Führungsrollen 32 ein, die ihrerseits an einem mit dem oberen Rand des Türsegmentes 6/2 verbundenen Winkelprofil 33 um die Rollenachse drehbar gelagert sind.

Entsprechend dem Winkelprofil 27 bildet auch das Winkelprofil 33 eine Führungskammer, nämlich eine Führungskammer 34 aus. In die Führungskammer 34 greifen Führungsrollen 35 ein, die an einem mit dem Türsegment 6/1 verschraubten Winkelprofil 36 gelagert sind.

Durch Zusammenwirken von Führungsrollen 35 und Winkelprofil 33 ist das Türsegment 6/1 an dem Türsegment 6/2 geführt; eine entsprechende Führung des Türsegmentes 6/2 an dem Türsegment 6/3 wird mittels der Führungsrollen 32 und des Winkelprofils 27 erreicht.

Ähnlich den Verhältnissen am oberen Rand der Türsegmente 6/1, 6/2, 6/3 stellen sich die Verhältnisse an deren unterem Rand dar.

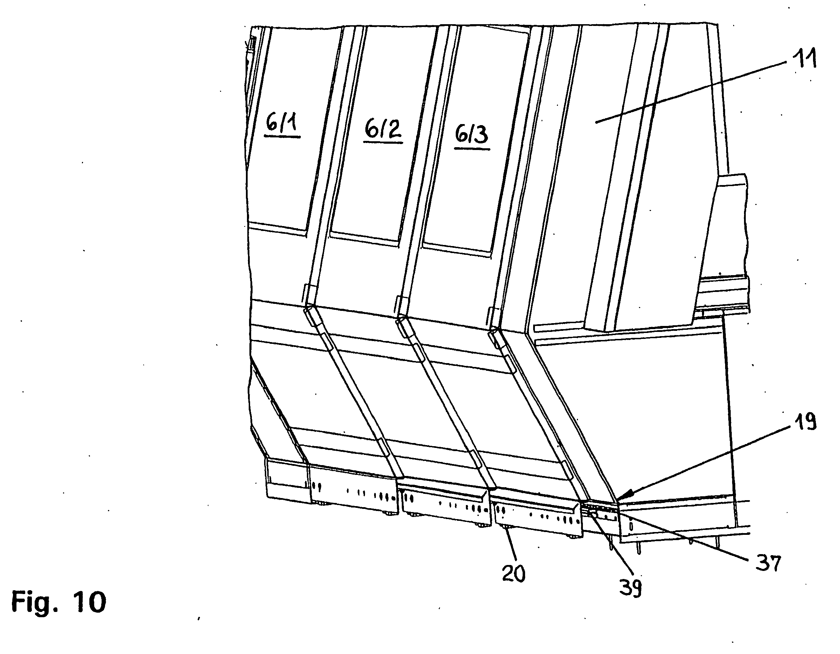

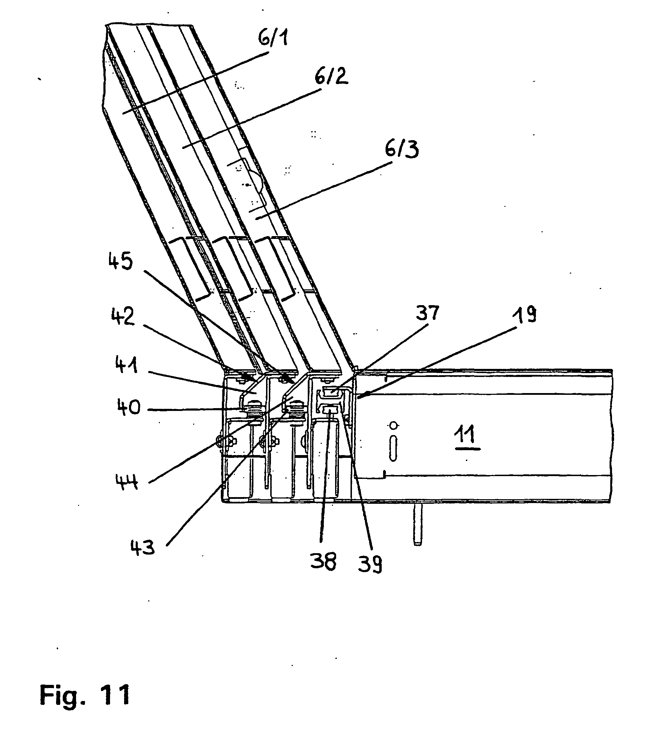

Ausweislich der Figuren 10 und 11 umfasst das untere Führungsteleskop 19 als Teleskopelemente eine mit der Durchlassbegrenzung 11 verschraubte Teleskopschiene 37, eine mit dem unteren Rand des Türsegments 6/3 verbundene Teleskopschiene 38 sowie ein zwischen den Teleskopschienen 37, 38 angeordnetes Teleskop-Führungsprofil 39. Führungsrollen 40 an dem Türsegment 6/1 greifen in eine Führungskammer 41 eines Winkelprofils 42 an dem Türsegment 6/2 ein. In entsprechender Weise ist das Türsegment 6/2 mit Führungsrollen 43 im Innern einer Führungskammer 44 geführt, die ihrerseits von einem mit dem Türsegment 6/3 verschraubten Winkelprofil 45 ausgebildet wird.

Auch die Verbindung zwischen dem unteren Führungsteleskop 19 und dem unteren Rand des Türsegmentes 6/3 ist mit Spiel in vertikaler Richtung und somit mit einer Möglichkeit zum Höhenausgleich ausgeführt.

Alles in allem ergibt sich eine Führung der Türsegmente 6/1, 6/2, 6/3, die in jeder Richtung des Raumes eine hinreichende Stabilität besitzt und die folglich definierte Verhältnisse bei der Öffnungs- und bei der Schließbewegung der Türsegmente 6/1, 6/2, 6/3 gewährleistet. Der Durchlass 7 der Arbeitsraumabtrennung 3 wird von der geöffneten Schiebetür 5 seitlich nahezu vollständig freigegeben. Von dem Untergrund der Laserbearbeitungsmaschine 1 nach oben steht bei geöffneter Schiebetür 5 ein vollständig freier Durchgang zur Verfügung. Die Blechauflage 13 ist daher optimal zugänglich.

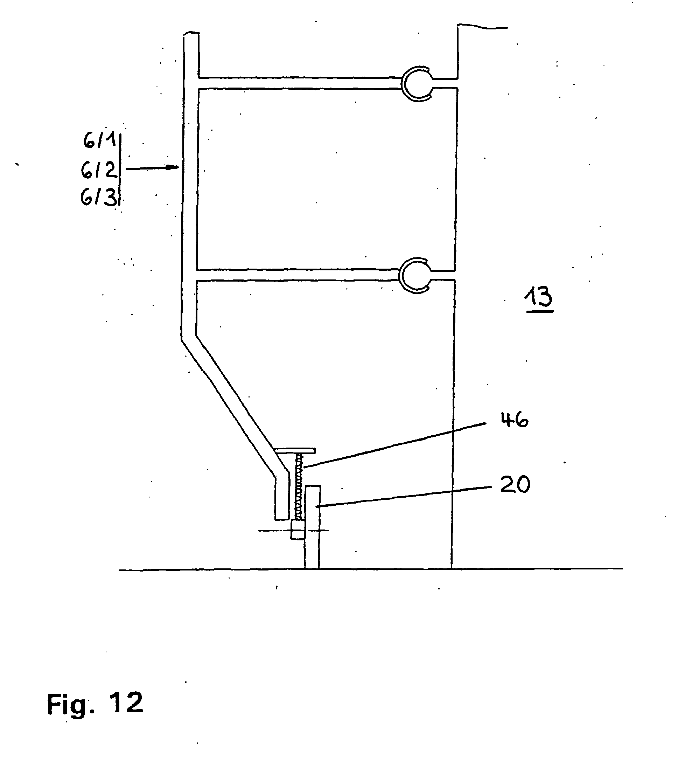

Figur 12 zeigt eine Alternative zu der vorstehend beschriebenen Führung der Türsegmente 6/1, 6/2, 6/3 an der Blechauflage 13 sowie zu der Lagerung der Türsegmente 6/1, 6/2, 6/3 auf dem Untergrund der Laserbearbeitungsmaschine 1. Gemäß Figur 12 ist die Führung der Türsegmente 6/1, 6/2, 6/3 an der Blechauflage 13 in vertikaler Richtung spielfrei. Ein Ausgleich von Bodenunebenheiten wird über eine in vertikaler Richtung spielbehaftete Lagerung der Rollen 20 am unteren Rand der Türsegmente 6/1, 6/2, 6/3 ermöglicht. So sind die Rollen 20 in dem Beispielsfall gemäß Figur 12 über Gasdruckfedern 46 an den Türsegmenten 6/1, 6/2, 6/3 abgestützt und dadurch in vertikaler Richtung gegenüber den Türsegmenten 6/1, 6/2, 6/3 verlagerbar.

## Patentansprüche

1. Maschinelle Anordnung zum Bearbeiten von Werkstücken, mit einem Arbeitsraum (4) für die Werkstückbearbeitung, in welchem eine Werkstücklagerung (13) angeordnet ist und welcher eine Arbeitsraumabtrennung (3) mit einem Durchlass (7) und wenigstens einem Verschlusselement (6/1, 6/2, 6/3) hierfür aufweist, wobei das Verschlusselement (6/1, 6/2, 6/3) in horizontaler Richtung zwischen einer Offen- und einer Geschlossenstellung bewegbar ist und den Durchlass (7) der Arbeitsraumabtrennung (3) in der Offenstellung wenigstens teilweise freigibt und in der Geschlossenstellung wenigstens teilweise versperrt und wobei das Verschlusselement (6/1, 6/2, 6/3) bei seiner Bewegung mittels wenigstens eines stationären Führungselementes (14, 15) geführt ist, das sich in Bewegungsrichtung (8) des Verschlusselementes (6/1, 6/2, 6/3) über wenigstens einen Teil der Durchlassbreite erstreckt, **dadurch gekennzeichnet, dass** das Verschlusselement (6/1, 6/2, 6/3) auf dem Untergrund der maschinellen Anordnung (1) aufliegend und in horizontaler Richtung beweglich abgestützt ist und dass oberhalb des Untergrundes der maschinellen Anordnung (1) wenigstens ein stationäres und sich über wenigstens einen Teil der Durchlassbreite erstreckendes stationäres Führungselement (14, 15) für das Verschlusselement (6/1, 6/2, 6/3) ausschließlich an der Werkstücklagerung (13) vorgesehen ist.

2. Maschinelle Anordnung nach Anspruch 1, **dadurch gekennzeichnet, dass** an der Werkstücklagerung (13) für wenigstens ein Verschlusselement (6/1, 6/2, 6/3) zumindest zwei in vertikaler Richtung gegeneinander versetzte stationäre Führungselemente (14, 15) vorgesehen sind. -

3. Maschinelle Anordnung nach einem der vorhergehenden Ansprüche, **dadurch gekennzeichnet, dass** seitlich neben dem Durchlass (7) wenigstens eine feststehende seitliche Lagerung für zumindest ein Verschlusselement (6/1, 6/2, 6/3) vorgesehen ist und dass das Verschlusselement (6/1, 6/2, 6/3) an der seitlichen Lagerung unter Führung in Bewegungsrichtung (8) gelagert ist.

4. Maschinelle Anordnung nach einem der vorhergehenden Ansprüche, **dadurch gekennzeichnet, dass** als feststehende seitliche Lagerung für zumindest ein Verschlusselement (6/1, 6/2, 6/3) ein feststehender Abtrennungsteil der Arbeitsraumabtrennung (3) vorgesehen ist.

5. Maschinelle Anordnung nach einem der vorhergehenden Ansprüche, **dadurch gekennzeichnet, dass** der als feststehende seitliche Lagerung für zumindest ein Verschlusselement (6/1, 6/2, 6/3) vorgesehene feststehende Abtrennungsteil von einer seitlichen Durchlassbegrenzung (11) der Arbeitsraumabtrennung (3) gebildet ist.

6. Maschinelle Anordnung nach einem der vorhergehenden Ansprüche, **dadurch gekennzeichnet, dass** wenigstens ein Verschlusselement (6/1, 6/2, 6/3) an zumindest einer feststehenden seitlichen Lagerung über wenigstens ein Führungsteleskop (18, 19) gelagert ist, das an einem Teleskopelement (25, 37) mit der feststehenden seitlichen Lagerung und an einem anderen Teleskopelement (26, 38) mit dem Verschlusselement (6/1, 6/2, 6/3) in Verbindung steht und das in der Bewegungsrichtung (8) des Verschlusselementes (6/1, 6/2, 6/3) teleskopierbar ist.

7. Maschinelle Anordnung nach einem der vorhergehenden Ansprüche, wobei die feststehende seitliche Lagerung für zumindest ein Verschlusselement (6/1, 6/2, 6/3) von einer seitlichen Durchlassbegrenzung (11) der Arbeitsraumabtrennung (3) gebildet und das Verschlusselement (6/1, 6/2, 6/3) über wenigstens ein Führungsteleskop (18, 19) an der seitlichen Durchlassbegrenzung (11) gelagert ist, **dadurch gekennzeichnet, dass** das Verschlusselement (6/1, 6/2, 6/3) in der Offenstellung senkrecht zu seiner Hauptebene gegenüber der seitlichen Durchlassbegrenzung (11) versetzt ist und dass das dem Verschlusselement (6/1, 6/2, 6/3) zugeordnete Teleskopelement (26, 38) in seiner der Öffnungsbewegung des Verschlusselementes (6/1, 6/2, 6/3) zugeordneten Bewegungsrichtung über das der Durchlassbegrenzung (11) zugeordnete Teleskopelement (25, 37) hinaus bewegbar ist.

8. Maschinelle Anordnung nach einem der vorhergehenden Ansprüche, **dadurch gekennzeichnet, dass** wenigstens ein Verschlusselement (6/1, 6/2, 6/3) mit Spiel in vertikaler Richtung an der Werkstücklagerung (13) in Bewegungsrichtung geführt und gegebenenfalls an der feststehenden seitlichen Lagerung gelagert ist und/oder dass wenigstens ein Verschlusselement (6/1, 6/2, 6/3) über eine in vertikaler Richtung Spiel aufweisende Abstützung auf dem Untergrund der maschinellen Anordnung (1) abgestützt ist.

9. Maschinelle Anordnung nach einem der vorhergehenden Ansprüche, **dadurch gekennzeichnet, dass** mehrere Verschlusselemente (6/1, 6/2, 6/3) vorgesehen sind, die senkrecht zu ihrer Hauptebene gegeneinander versetzt und teleskopartig in die offen- und in die Geschlossenstellung bewegbar sind.

10. Maschinelle Anordnung nach einem der vorhergehenden Ansprüche, **dadurch gekennzeichnet, dass** wenigstens ein Verschlusselement (6/1, 6/2, 6/3) an einem anderen Verschlusselement (6/1, 6/2, 6/3) in Bewegungsrichtung (8) geführt ist.

11. Maschinelle Anordnung nach einem der vorhergehenden Ansprüche, **dadurch gekennzeichnet, dass** ein Verschlusselement (6/3), das einer feststehenden seitlichen Lagerung, vorzugsweise einer seitlichen Durchlassbegrenzung (11), am nächsten liegt, an der feststehenden seitlichen Lagerung, gegebenenfalls an der seitlichen Durchlassbegrenzung (11), insbesondere über wenigstens ein Führungsteleskop (18, 19) unter Führung in Bewegungsrichtung gelagert ist.

## Claims

1. Machine arrangement for processing workpieces, having a workspace (4) for processing the workpieces, in which workspace (4) a workpiece support (13) is arranged and which has a workspace partition (3) having an aperture (7) and at least one closure element (6/1, 6/2, 6/3) therefor, the closure element (6/1, 6/2, 6/3) being able to be moved in a horizontal direction between an open and a closed position and at least partially opening up the aperture (7) of the workspace partition (3) in the open position and at least partially blocking it in the closed position, and the closure element (6/1, 6/2, 6/3) being guided during its movement by means of at least one stationary guiding element (14, 15) which extends in the movement direction (8) of the closure element (6/1, 6/2, 6/3) over at least part of the aperture width, **characterised in that** the closure element (6/1, 6/2, 6/3) is supported so as to rest on the base of the machine arrangement (1) and so as to be able to move in a horizontal direction, and **in that**, above the base of the machine arrangement (1), at least one stationary guiding element (14, 15) which extends over at least part of the aperture width is provided for the closure element (6/1, 6/2, 6/3) exclusively on the workpiece support (13).

2. Machine arrangement according to claim 1, **characterised in that** at least two stationary guiding elements (14, 15) which are offset relative to each other in a vertical direction are provided for at least one closure element (6/1, 6/2, 6/3) on the workpiece support (13).

3. Machine arrangement according to either of the preceding claims, **characterised in that** at least one fixed lateral support is provided for at least one closure element (6/1, 6/2, 6/3) laterally beside the aperture (7), and **in that** the closure element (6/1, 6/2, 6/3) is supported on the lateral support so as to be guided in the movement direction (8).

4. Machine arrangement according to any one of the preceding claims, **characterised in that** a fixed partition portion of the workspace partition (3) is provided as a fixed lateral support for at least one closure element (6/1, 6/2, 6/3).

5. Machine arrangement according to any one of the preceding claims, **characterised in that** the fixed partition portion which is provided as a fixed lateral support for at least one closure element (6/1, 6/2, 6/3) is formed by a lateral aperture boundary (11) of the workspace partition (3).

6. Machine arrangement according to any one of the preceding claims, **characterised in that** at least one closure element (6/1, 6/2, 6/3) is supported on at least one fixed lateral support by means of at least one guiding telescope-like member (18, 19), which is connected, at a telescope-like element (25, 37), to the fixed lateral support and, at another telescope-like element (26, 38), to the closure element (6/1, 6/2, 6/3), and which can be extended in the manner of a telescope in the movement direction (8) of the closure element (6/1, 6/2, 6/3).

7. Machine arrangement according to any one of the preceding claims, the fixed lateral support for at least one closure element (6/1, 6/2, 6/3) being formed by a lateral aperture boundary (11) of the workspace partition (3) and the closure element (6/1, 6/2, 6/3) being supported on the lateral aperture boundary (11) by means of at least one guiding telescope-like member (18, 19), **characterised in that** the closure element (6/1, 6/2, 6/3), in the open position, is offset relative to the lateral aperture boundary (11) perpendicularly relative to its main plane and **in that** the telescope-like element (26, 38) which is associated with the closure element (6/1, 6/2, 6/3) can be moved in its movement direction associated with the opening movement of the closure element (6/1, 6/2, 6/3) beyond the telescope-like element (25, 37) which is associated with the aperture boundary (11).

8. Machine arrangement according to any one of the preceding claims, **characterised in that** at least one closure element (6/1, 6/2, 6/3) is guided with play in a vertical direction on the workpiece support (13) in the movement direction and, if applicable, is supported on the fixed lateral support and/or in that at least one closure element (6/1, 6/2, 6/3) is supported on the base of the machine arrangement (1) by means of a support which has play in a vertical direction.

9. Machine arrangement according to any one of the preceding claims, **characterised in that** there are provided a plurality of closure elements (6/1, 6/2, 6/3) which are offset relative to each other perpendicularly relative to the main plane thereof and which can be moved into the open and closed position in the manner of a telescope.

10. Machine arrangement according to any one of the preceding claims, **characterised in that** at least one closure element (6/1, 6/2, 6/3) is guided on another closure element (6/1, 6/2, 6/3) in the movement direction (8).

11. Machine arrangement according to any one of the preceding claims, **characterised in that** a closure element (6/3) which is closest to a fixed lateral support, preferably a lateral aperture boundary (11), is supported on the fixed lateral support, if applicable on the lateral aperture boundary (11), in particular by means of at least one guiding telescope-like member (18, 19) so as to be guided in a movement direction.

## Revendications

1. Agencement mécanique pour l'usinage de pièces, comportant un espace de travail (4) affecté à l'usinage des pièces, dans lequel se trouve un logement pour pièces (13), et qui présente une séparation (3) de l'espace de travail munie d'un passage traversant (7) et d'au moins un élément obturateur (6/1, 6/2, 6/3) destiné à ce dernier, ledit élément obturateur (6/1, 6/2, 6/3) étant mobile dans la direction horizontale entre une position d'ouverture et une position de fermeture, sachant qu'il dégage au moins partiellement le passage traversant (7) de la séparation (3) de l'espace de travail, dans la position d'ouverture, et occulte au moins partiellement ledit passage dans la position de fermeture, et ledit élément obturateur (6/1, 6/2, 6/3) étant guidé, au cours de son mouvement, à l'aide d'au moins un élément stationnaire de guidage (14, 15) s'étendant sur au moins une partie de la largeur du passage traversant dans la direction (8) du mouvement dudit élément obturateur (6/1, 6/2, 6/3), **caractérisé par le fait que** l'élément obturateur (6/1, 6/2, 6/3) repose sur la semelle de l'agencement mécanique (1), sur laquelle il est en appui avec mobilité dans le sens horizontal ; et **par le fait qu'**au moins un élément stationnaire de guidage (14, 15), s'étendant sur au moins une partie de la largeur du passage traversant, est prévu pour l'élément obturateur (6/1, 6/2, 6/3), exclusivement sur le logement pour pièces (13).

2. Agencement mécanique selon la revendication 1, **caractérisé par le fait qu'**au moins deux éléments stationnaires de guidage (14, 15) décalés l'un de l'autre dans le sens vertical sont prévus, sur le logement pour pièces (13), pour au moins un élément obturateur (6/1, 6/2, 6/3).

3. Agencement mécanique selon l'une des revendications précédentes, **caractérisé par le fait qu'**au moins une portée latérale fixe, jouxtant latéralement le passage traversant (7), est prévue pour au moins un élément obturateur (6/1, 6/2, 6/3) ; et **par le fait que** ledit élément obturateur (6/1, 6/2, 6/3) est monté sur ladite portée latérale avec guidage dans la direction (8) du mouvement.

4. Agencement mécanique selon l'une des revendications précédentes, **caractérisé par le fait qu'**une partie de cloisonnement fixe de la séparation (3) de l'espace de travail est prévue en tant que portée latérale fixe pour au moins un élément obturateur (6/1, 6/2, 6/3).

5. Agencement mécanique selon l'une des revendications précédentes, **caractérisé par le fait que** la partie de cloisonnement fixe, prévue en tant que portée latérale fixe pour au moins un élément obturateur (6/1, 6/2, 6/3), est matérialisée par une délimitation latérale (11) du passage traversant de la séparation (3) de l'espace de travail.

6. Agencement mécanique selon l'une des revendications précédentes, **caractérisé par le fait qu'**au moins un élément obturateur (6/1, 6/2, 6/3) est monté, sur au moins une portée latérale fixe, par l'intermédiaire d'au moins un télescope de guidage (18, 19) qui est en liaison avec la portée latérale fixe sur un élément télescopique (25, 37), et avec l'élément obturateur (6/1, 6/2, 6/3) sur un autre élément télescopique (26, 38), et peut accomplir un mouvement télescopique dans la direction (8) du mouvement dudit élément obturateur (6/1, 6/2, 6/3).

7. Agencement mécanique selon l'une des revendications précédentes, dans lequel la portée latérale fixe affectée à au moins un élément obturateur (6/1, 6/2, 6/3) est matérialisée par une délimitation latérale (11) du passage traversant de la séparation (3) de l'espace de travail, et ledit élément obturateur (6/1, 6/2, 6/3) est monté sur ladite délimitation latérale (11) par l'intermédiaire d'au moins un télescope de guidage (18, 19), **caractérisé par le fait que** l'élément obturateur (6/1, 6/2, 6/3) est décalé dans la position d'ouverture, perpendiculairement à son plan principal, vis-à-vis de la délimitation latérale (11) du passage traversant; et **par le fait que** l'élément télescopique (26, 38) associé à l'élément obturateur (6/1, 6/2, 6/3) peut être déplacé, dans sa direction de mouvement assignée au mouvement d'ouverture dudit élément obturateur (6/1, 6/2, 6/3), au-delà de l'élément télescopique (25, 37) associé à la délimitation (11) du passage traversant.

8. Agencement mécanique selon l'une des revendications précédentes, **caractérisé par le fait qu'**au moins un élément obturateur (6/1, 6/2, 6/3) est guidé dans la direction du mouvement sur le logement pour pièces (13), avec jeu dans le sens vertical, et est éventuellement monté sur la portée latérale fixe ; et/ou **par le fait qu'**au moins un élément obturateur (6/1, 6/2, 6/3) est en appui, sur la semelle dudit agencement mécanique (1), par l'intermédiaire d'un soutien présentant un jeu dans le sens vertical.

9. Agencement mécanique selon l'une des revendications précédentes, **caractérisé par** la présence de plusieurs éléments obturateurs (6/1, 6/2, 6/3) qui sont mutuellement décalés perpendiculairement à leur plan principal, et peuvent être animés de mouvements télescopiques vers la position d'ouverture et vers la position de fermeture.

10. Agencement mécanique selon l'une des revendications précédentes, **caractérisé par le fait qu'**au moins un élément obturateur (6/1, 6/2, 6/3) est guidé sur un autre élément obturateur (6/1, 6/2, 6/3) dans la direction (8) du mouvement.

11. Agencement mécanique selon l'une des revendications précédentes, **caractérisé par le fait qu'**un élément obturateur (6/3) le plus rapproché d'une portée latérale fixe, de préférence d'une délimitation latérale (11) du passage traversant, est monté sur ladite portée latérale fixe, éventuellement sur ladite délimitation latérale (11) du passage traversant, en particulier par l'intermédiaire d'au moins un télescope de guidage (18, 19) avec guidage dans la direction du mouvement.
